# EUROPÄISCHE PATENTSCHRIFT

(11) **EP 2 001 919 B1**
(45) Veröffentlichungstag und Bekanntmachung des Hinweises auf die Patenterteilung: **03.11.2010**
(21) Anmeldenummer: 07723030.8
(22) Anmeldetag: 03.03.2007
(51) Int. Cl.: C08G 18/10, C08G 18/12, C08G 18/78, C08G 18/79

(54) **POLYURETHANFORMTEIL, VERFAHREN ZU DESSEN HERSTELLUNG UND DESSEN VERWENDUNG**
POLYURETHANE MOLDING, PROCESS FOR ITS PRODUCTION AND ITS USE
ELEMENT EN POLYURETHANNE, SON PROCEDE DE FABRICATION ET D'UTILISATION

(30) Priorität: 06.04.2006 DE 102006016617
(43) Veröffentlichungstag der Anmeldung: 17.12.2008
(73) Patentinhaber: Johnson Controls Interiors GmbH & Co. KG, 47929 Grefrath (DE)
(72) Erfinder: MÜHLFELD, Horst, 64689 Grasellenbach (DE); SCHAUBER, Thomas, 69502 Hemsbach (DE); BRÜCKNER, Hubert, 40699 Erkrath (DE); BOGDANOV, Natalie, 47906 Kempen (DE)
(74) Vertreter: Herden, Andreas F.
(86) Internationale Anmeldenummer: PCT/EP2007/001842
(87) Internationale Veröffentlichungsnummer: WO 2007/115611

(56) Entgegenhaltungen:
- EP-B1- 0 929 586
- WO-A-92/16576
- US-A- 4 772 639

## Beschreibung

### Technisches Gebiet

Die Erfindung betrifft Polyurethanformteile sowie deren Herstellung und deren Verwendung. Die vorliegende Polyurethanformteile sollen insbesondere als Oberflächenmaterial, insbesondere für Folien zur Oberflächenverkleidung von Bauteilen, im Automobilinnenbereich Verwendung finden.

Polyurethanformteile können in einem Gießverfahren oder Spritzformreaktionsverfahren (RIM, reaction injection molding) aus einem Polyurethansystem als Reaktivgemisch in offenen oder geschlossenen Formen hergestellt werden.

Für ein wirtschaftliches Verfahren mit erhöhter Produktivität und niedrigen Produktionskosten sind möglichst geringe Formstandzeiten von besonderer Bedeutung.

Unter der Formstandzeit wird die Zeit verstanden, die eine Stoffzusammensetzung benötigt, um eine ausreichende Anfangsfestigkeit zu erreichen, die für eine gute Entformbarkeit bzw. eine Entnahme aus einer Spritz- bzw. Gießform ohne Verzug und Reißen des Produktes erforderlich ist.

### Stand der Technik

In den US-Patenten US 4,150,206 und 4,292,411 werden zur Verringerung der Formstandzeit bei der Herstellung von Polyurethanen spezielle katalytische Systeme beschrieben, die im Wesentlichen aus einer Kombination eines Amininitiators mit einem Blei- oder Wismutkatalysator bestehen. Die speziellen katalytischen Systeme werden an verschiedenen Integralschaumstoffen und Elastomeren beschrieben, wobei die Formstandzeiten in den angeführten Beispielen in einem Bereich von mehreren Minuten liegen.

In den Druckschriften EP-A 0690 085 und US-A 5 502 147 werden Polyurethansysteme auf der Basis von vergleichsweise reaktivem Hexamethylendiisocyanat (HDI) anstelle von Isophorondiisocyanat (IPDI) beschrieben, dessen Verwendung zu Systemen führt, die gemäß den Beispielen in der Druckschrift US-A 4 772 639 Formstandzeiten von 3 bis 10 Minuten erfordern.

In dem Patent EP 0 929 586 B1 werden Polyurethanelastomere offenbart, die unter einer wirtschaftlich akzeptablen Formstandzeit im RIM-Prozess auf Basis der Isocyanatkomponente IPDI zu Formpolyurethan verarbeitbar und zur Fenster-Einkapselung geeignet sind. Diese Polyurethanelastomere sind bei vergleichsweise niedrigen Formstandzeiten herstellbar.

Allerdings sind die mechanischen Eigenschaften und die Licht- und Temperaturstabilität bekannter Polyurethansysteme vielfach für eine Anwendung im Automobilinnenbereich nicht ausreichend.

Die Automobilindustrie fordert für ein Oberflächenmaterial im Automobilinnenbereich, insbesondere für Folien zur Oberflächenverkleidung von Bauteilen, hohe Materialfestigkeiten, speziell eine hohe Zugfestigkeit und Weiterreißfestigkeit sowie eine hohe Abriebfestigkeit. Auch die Haptik, insbesondere ein trockener und lederartiger Griff, sowie eine hohe Licht- und Temperaturstabilität sind Kriterien, die für die Anwendung im Automobilinnenbereich erfüllt werden müssen. Die Oberfläche darf zum Beispiel bei einer Heißlichtalterung bei 120°C sowie bei der Sonnensimulation über mehrere Monate keine Farbveränderung und keine Veränderung im Glanzgrad und Narbenbild zeigen. Insbesondere ein Aufglänzen der Narbenstruktur ist nach dem speziellen Alterungsprozess nicht gewünscht.

### Darstellung der Erfindung

Ausgehend vom Stand der Technik ist es Aufgabe der vorliegenden Erfindung, ein Verfahren zur Herstellung von Polyurethanformteilen bereitzustellen, das bei kurzen Formstandzeiten besonders wirtschaftlich ist und bei dem die hergestellten Polyurethanformteile sich durch eine hohe mechanische Festigkeit sowie eine hohe Temperatur- und Lichtstabilität auszeichnen. Diese Polyurethanformteile sollen insbesondere als Oberflächenmaterial, insbesondere als Folien zur Oberflächenverkleidung von Bauteilen, im Automobilinnenbereich Verwendung finden.

Die Aufgabe wird erfindungsgemäß gelöst, indem
A) eine Komposition aus folgenden Komponenten,
   A1) einem OH-terminierten trifunktionalen Prepolymer aus
      i) Polyol oder einer Polyolkombination, insbesondere mit einer Molmasse von 650 bis 4000 und
      ii) Trimerisat auf Hexamethylendiisocyanat(HDI)-Basis und/oder Trimer auf Hexamethylendiisocyanat(HDI)-Basis mit Biuretstruktur, insbesondere im molaren Verhältnis von Polyol(kombination) zu Isocyanat von 3:1,
   A2) einem Polyol oder einer Polyolkombination,
      insbesondere mit einer Molmasse von 650 bis 4000,
   A3) mindestens einem di- und/oder trifunktionellen Kettenverlängerer und/oder Vernetzer mit NH-, NH₂- und/oder OH-Gruppen und
   A4) einem Katalysator-System aus mindestens einer metallorganischen Verbindung in Kombination mit mindestens einem Aminkatalysator und gegebenenfalls
   A5) einem Stabilisator-System und gegebenenfalls
   A6) mindestens einem Additiv
   sowie
B) eine Isocyanat-Komposition aus
   i) 10 bis 90 Gew.% Isophorondiisocyanat (IPDI) und/oder Methylen-bis-(4-isocyanatocyclohexan) (H₁₂-MDI) und
   ii) 10 bis 90 Gew.% Trimer auf Hexamethylendiisocyanat(HDI)-Basis mit Biuretstruktur und/oder Trimerisat auf Hexamethylendiisocyanat(HDI)-Basis
in einem Gießverfahren oder Spritzformreaktionsverfahren zu einem aliphatischen und/oder cycloaliphatischen Polyurethanformteil umgesetzt werden.

Für die Herstellung des lichtechten Polyurethanformteils bzw. -systems werden bevorzugt aliphatische und/oder cycloaliphatische Polyurethankomponenten eingesetzt, da aromatische Bestandteile im Polyurethansystem bei Lichteinwirkung zu Farbveränderungen und Vergilbung der Produkte führen. Überraschenderweise zeichnen sich die erfindungsgemäßen Polyurethane trotz des Einsatzes von aliphatischen und/oder cycloaliphatischen Isocyanaten durch besonders gute Festigkeitseigenschaften aus, obwohl üblicherweise die mechanischen Eigenschaften von Polyurethanen auf Basis von aliphatischen und/oder cycloaliphatischen Isocyanaten deutlich schlechter sind als die mechanischen Eigenschaften von Polyurethanen auf Basis aromatischer Isocyanate.

Auch werden trotz des Einsatzes aliphatischer und/oder cycloaliphatischer Isocyanate, die grundsätzlich eine geringere Reaktivität als aromatische Isocyanate aufweisen, sehr geringe Formstandzeiten erreicht.

Die spezielle Kombination vorzugsweise aus IPDI und/oder H₁₂-MDI (Bi) mit Trimer auf HDI-Basis mit Biuretstruktur mit einer Molmasse von 478 und/oder Trimerisat auf HDI-Basis mit einer Molmasse von 504 (Bii)), umgesetzt mit einem OH-terminierten trifunktionellen Prepolymer (A1), das auf Basis von Polyetherpolyol und/oder Polyesterpolyol (A1i)) mit einem Trimer auf HDI-Basis mit Biuretstruktur und/oder einem Trimerisat auf HDI-Basis (A1ii)) hergestellt ist, sowie eine Kettenverlängerung und Vernetzung mit Amin- und OH-Komponenten (A3) führt zu Formteilen mit besonders hohen Festigkeitseigenschaften, hoher Wärmestabilität und Formstandzeiten von gleich oder weniger als 60 Sekunden.

Vorteilhafterweise werden Isophorondiisocyanat (IPDI) und Methylen-bis-(4-isocyanatocyclohexan) (H₁₂-MDI) alternativ als Komponente Bi) eingesetzt.

Bevorzugt werden Trimerisat auf HDI-Basis und Trimer auf HDI-Basis mit Biuretstruktur alternativ als Komponente Bii) bzw. A1ii) eingesetzt.

Für die Prepolymere A1 und die Isocyanat-Komposition B ist der Einsatz von Trimerisat auf Hexamethylendiisocyanat(HDI)-Basis mit einer Molmasse von 504 besonders bevorzugt.

In vorteilhafter Ausgestaltung werden
A1) 20 bis 85 Gew.% des Prepolymers bezogen auf das Gewicht der gesamten Komposition A,
A2) 10 bis 70 Gew.% des Polyols oder der Polyolkombination bezogen auf das Gewicht der gesamten Komposition A,
A3) 5 bis 20 Gew.% des Kettenverlängerers und/oder Vernetzers bezogen auf das Gewicht der gesamten Komposition A,
A4) 0,01 bis 3,5 Gew.% des Katalysator-Systems bezogen auf das Gewicht der gesamten Komposition A und/oder
A5) 0,2 bis 1,5 des Gew.% Stabilisator-Systems bezogen auf das Gewicht der gesamten Komposition A
eingesetzt.

Die Isocyanat-Komposition B weist insbesondere einen NCO-Gehalt zwischen 25 und 35 Gew.% auf und umfasst vorteilhafterweise
Bi) 40 bis 80 Gew.%, insbesondere 50 bis 75 Gew.%, des IPDI und/oder des H₁₂-MDI bezogen auf das Gewicht der gesamten Isocyanat-Komposition B und
Bii) 20 bis 60 Gew.%, insbesondere 25 bis 50 Gew.%, des Trimers auf HDI-Basis mit Biuretstruktur und/oder des Trimerisats auf HDI-Basis bezogen auf das Gewicht der gesamten Isocyanat-Komposition B, insbesondere mit einem Gewichtsverhältnis von Bi):Bii) von 2:1 bis 1:1, bevorzugt von 2:1 bis 1,25:1.

Als Polyol allein oder als Polyolkombination (A1i) und/oder A2) wird vorzugsweise eines bzw. eine ausgewählt aus der Gruppe von
- Polypropylenetherpolyol, insbesondere mit einer Molmasse von 800 bis 2000,
- Polycaprolacton(PCL)-Polytetrahydrofuran(PTHF)-Copolymer, insbesondere mit einer Molmasse von 2000 bis 4000,
- Polytetrahydrofuran, insbesondere mit einer Molmasse von 650 bis 3000,
- Polycarbonatdiol, insbesondere mit einer Molmasse von 1000 bis 2000, und/oder
- Polyadipat auf der Basis von Butandiol, Hexandiol und/oder Neopentylglykol, insbesondere mit einer Molmasse von 1000 bis 2000, eingesetzt.

Für einen langkettigen Weichsegmentaufbau werden vorteilhafterweise auch mit der weiteren Zugabe von di- und/oder trifunktionellen Polyolen auf Polyether- und/oder Polyesterbasis stabile Mischungen für die Umsetzung mit Isocyanat erhalten.

Für eine schnelle Aushärtung und kurze Formstandzeiten lassen sich die erforderlichen Grundbausteine der Polyurethane durch Vorreaktion des speziellen OH-terminierten trifunktionellen Prepolymers (A1) in bevorzugter Ausgestaltung durch Umsetzung von Trimerisat auf HDI-Basis mit den oben beschriebenen Polyolen und Polyolkombinationen herstellen.

Mit der Zugabe von Polyol oder Polyolkombinationen (A2) in die Komposition A wird hauptsächlich die Härte des Polyurethansystems bzw. des Polyurethanformteils beeinflusst, wobei die Verwendung von Polyol mit der Funktionalität 2 für einen linearen Aufbau und eine bessere Kristallisation der Reaktionsprodukte bevorzugt wird. Als besonders geeignet haben sich Polypropylenetherpolyol mit einer Molmasse von 1000 und 2000, PCL-PTHF-Copolymer mit einer Molmasse von 2000, Polytetrahydrofuran mit einer Molmasse von 2000 und Neopentylglykol-Adipat mit einer Molmasse von 2000 erwiesen.

Aus Gründen der niedrigeren Viskosität werden für eine gute Verarbeitung und eine gute Kompatibilität mit den weiteren Amin- und Hydroxylgruppen der Kettenverlängerer und/oder Vernetzer für die Herstellung der Polyurethanformteile Polyolkombinationen (A2) vorteilhafterweise aus zwei Polyolen ausgewählt von Polypropylenetherpolyol, PCL-PTHF-Copolymer und Neopentylglykol-Adipat eingesetzt.

Besonders vorteilhaft zeigt sich bei den Polyolkombinationen (A1i) und/oder A2) der Einsatz von PCL-PTHF-Copolmer, das als Phasenvermittler zur besseren Homogenisierung und Herstellung einer lagerstabilen Mischung mit den im Aufbau unterschiedlichen Polyether- und Polyesterpolyolen geeignet ist.

In besonders vorteilhafter Ausgestaltung werden die gleichen Polyolkombinationen sowohl als Komponente A1i) als auch als Komponente A2 eingesetzt.

Im Hinblick auf eine besonders geringe Formstandzeit und eine besonders hohe Zugfestigkeit, Bruchdehnung sowie Weiterreißfestigkeit werden in einer besonders bevorzugten Ausgestaltung als Komponenten A1i) und A2 jeweils Polypropylenetherpolyol, insbesondere mit einer Molmasse von 2000, einer OH-Zahl von 54 und einem Propylenoxid(PO)-Gehalt von 100%, und PCL-PTHF-Copolymer, insbesondere mit einer Molmasse von 2000 und einer OH-Zahl von 58, eingesetzt.

Im Hinblick auf eine besonders geringe Formstandzeit und eine hohe Zugfestigkeit, Bruchdehnung sowie Weiterreißfestigkeit werden vorteilhafterweise als Komponenten A1i) und A2 jeweils Polypropylenetherpolyol, insbesondere mit einer Molmasse von 2000, einer OH-Zahl von 54 und einem PO-Gehalt von 100%, und Polytetrahydrofuran (PTHF), insbesondere mit einer Molmasse von 2000 und einer OH-Zahl von 56, eingesetzt.

Im Hinblick auf eine geringe Formstandzeit und eine ganz besonders hohe Zugfestigkeit, Bruchdehnung sowie Weiterreißfestigkeit werden vorzugsweise als Komponenten A1i) und A2 jeweils PCL-PTHF-Copolymer, insbesondere mit einer Molmasse von 2000 und einer OH-Zahl von 58, und Neopentylglykol-Adipat, insbesondere mit einer Molmasse von 2000 und einer OH-Zahl von 55, eingesetzt.

Als Kettenverlängerer und/oder Vernetzer (A3) werden vorteilhafterweise solche ausgewählt aus der Gruppe von Butandiol, Hexandiol, Trimethyolpropan, Ethanolamin, Diethanolamin, Ethylendiamin und/oder Hexamethylendiamin allein oder in Kombination mit einer Molmasse von 60 bis 250 eingesetzt.

Die Amin-Gruppen haben dabei einen deutlichen Einfluss auf die Reaktivität des Polyurethans. Hohe Anteile im Vernetzer-System bewirken bei der Umsetzung mit Isocyanat eine zu schnelle Gelierung der Mischung mit dem Nachteil, dass bei Formen mit großen Fließwegen keine vollständige Füllung realisiert werden kann.

Bevorzugt werden daher Kombinationen von Hydroxyl- und Amin-Gruppen eingesetzt. Der Gehalt an Komponenten mit Amin-Gruppen liegt vorteilhafterweise in einem Bereich von 1 bis 40 Gew.% bezogen auf die Summe der Kettenverlängerer und Vernetzer.

Als Katalysator-System (A4) wird bevorzugt eines ausgewählt aus der Gruppe der metallorganischen Verbindungen, wie Wismut, Zinn-, Zirconium- und/oder Kaliumverbindungen, in Kombination mit Aminkatalysatoren, insbesondere Triethylendiamin und/oder Dimethylaminopropylharnstoff, eingesetzt.

Als Stabilisator-System (A5) wird vorteilhafterweise eines ausgewählt aus der Gruppe der Antioxidantien, UV-Absorber und/oder Lichtstabilisatoren eingesetzt.

Für eine gute Beständigkeit gegen Licht-, Sauerstoff- und Hitzeabbau werden als Stabilisator-System (A5) vorzugsweise Antioxidans und UV-Absorber in Kombination mit Lichtstabilisatoren zugesetzt. Bevorzugt werden als Antioxidans solche vom Typ substituierter Phenole und/oder aliphatischer oder aromatischer Organophosphite verwendet, als Lichtstabilisierungsmittel vorzugsweise solche vom Typ substituierter alicyclischer Amine und als UV-Absorber vorteilhafterweise solche vom Typ Benzotriazol.

Gegebenenfalls können der Komposition A Additive (A6), insbesondere Wasserabsorptionsmittel, wie zum Beispiel Zeolithe, Fließhilfsmittel und/oder interne Formtrennmittel zugesetzt werden.

Die Kompositionen A und B weisen vorteilhafterweise einen NCO-Index zwischen 95 und 115 auf und werden vorzugsweise bei einer Temperatur von 40 bis 60°C verarbeitet und in eine auf eine Temperatur zwischen 60°C und 120°C, insbesondere zwischen 80°C und 100°C; temperierte Form gegossen bzw. gespritzt.

Des Weiteren wird die Aufgabe der vorliegenden Erfindung, Polyurethanformteile bereitzustellen, die sich durch eine hohe Temperatur- und Lichtstabilität auszeichnen, und die bei kurzen Formstandzeiten besonders wirtschaftlich hergestellt werden können, gelöst durch die Merkmale des Anspruchs 10.

Verwendung finden die vorgenannten Polyurethanformteile vorzugsweise als Folie, insbesondere zur Oberflächenverkleidung von Bauteilen, insbesondere im Automobilinnenbereich.

Die vorliegende Erfindung betrifft weiterhin ein Polyurethansystem, das eine Komposition A und eine Komposition B umfasst, wobei
die Komposition A folgende Komponenten umfasst:
A1) ein OH-terminiertes trifunktionales Prepolymer aus
   i) Polyol oder einer Polyolkombination,
      insbesondere mit einer Molmasse von 650 bis 4000 und insbesondere mit einer OH-Zahl von 100 bis 500 und
   ii) Trimerisat auf Hexamethylendiisocyanat(HDI)-Basis und/oder Trimer auf Hexamethylendiisocyanat(HDI)-Basis mit Biuretstruktur, insbesondere im molaren Verhältnis von Polyol(kombination) zu Isocyanat von 3:1,
A2) ein Polyol oder eine Polyolkombination, insbesondere mit einer Molmasse von 650 bis 4000,
A3) mindestens einen di- und/oder trifunktionellen Kettenverlängerer und/oder Vernetzer mit NH-, NH₂- und/oder OH-Gruppen und
A4) ein Katalysator-System aus mindestens einer metallorganischen Verbindung in Kombination mit mindestens einem Aminkatalysator und gegebenenfalls
A5) ein Stabilisator-System und gegebenenfalls
A6) mindestens ein Additiv
und wobei die Isocyanat-Komposition B folgende Komponenten umfasst:
i) 10 bis 90 Gew.% Isophorondiisocyanat (IPDI) und/oder
   Methylen-bis-(4-isocyanatocyclohexan) (H₁₂-MDI) und
ii) 10 bis 90 Gew.% Trimer auf Hexamethylendiisocyanat(HDI)-Basis mit Biuretstruktur und/oder Trimerisat auf Hexamethylendiisocyanat(HDI)-Basis.

Dabei weisen bevorzugte Ausgestaltungen die oben genannten Spezifizierungen der Kompositionen A und B auf.

Das genannte Polyurethansystem weist vorzugsweise eine Zugfestigkeit nach DIN/ISO 527-3 von größer 10 MPa, bevorzugt von größer 15 MPa, und/oder eine Bruchdehnung nach DIN/ISO 527-3 von größer 170%, bevorzugt von größer 190%, und/oder eine Weiterreißfestigkeit nach DIN/ISO 13937 von größer 5 N/mm, bevorzugt von größer 7 N/mm, auf.

Derartige Polyurethansysteme lassen sich vorteilhafterweise zur Herstellung von Formkörpern, Vliesstoffen oder Folien für hygienische und medizinische Anwendungen einsetzen.
Für die erfindungsgemäßen Polyurethanformteile bzw. Polyurethansysteme werden insbesondere bei der Zugfestigkeit, Weiterreiß- und Abriebfestigkeit hohe Werte erzielt. In der Wärme- und Heißlichtalterung bei 120°C, geprüft gemäß den Anforderungen der Automobilindustrie an RIM-Folien, zeigten sich keine Veränderungen des Narbenbildes der Oberfläche. Auch ein Aufglänzen der Oberfläche wurde nicht beobachtet.

### Ausführung der Erfindung

Im Folgenden werden besonders bevorzugte Ausführungsbeispiele dieser Erfindung beschrieben.

Für die Herstellung von Prüffolien wurden zwei reaktive Kompositionen A und B hergestellt:
Komposition A:
A1) OH-terminiertes Prepolymer aus Polyol(komination) und Trimerisat auf HDI-Basis
A2) Polyol(kombination)
A3) Kettenverlängerer und Vernetzer
A4) Katalysator-System
A5) Stabilisator-System

Komposition B:
Bi) IPDI oder H₁₂-MDI
Bii) Trimerisat auf HDI-Basis oder Trimer auf HDI-Basis mit Biuretstruktur

| | |
|---|---|
| IPDI: | Isophorondiisocyanat, Molmasse 222, NCO-Gehalt 37,6% (Vestanat IPDI, Fa. Degussa) |
| H₁₂-MDI: | Methylen-bis-(4-isocyanatocyclohexan), Molmasse 262, (Desmodur W, Fa. Bayer) |
| Trimerisat auf HDI-Basis: | Trimerisat auf Hexamethylendiisocyanat-Basis, Molmasse 504, NCO-Gehalt 22%, Funktionalität 3 (Tolonate HDT, Fa. Rhodia) |
| Trimer auf HDI-Basis mit Biuretstruktur: Biuretstruktur, | Trimer auf Hexamethylendiisocyanat-Basis mit |
| | Molmasse 478, NCO-Gehalt 22%, Funktionalität 3 (Tolonate HDB, Fa. Rhodia) |

Für das Gießverfahren werden die Kompositionen A und B bei einer Temperatur von 40°C mit einem hochtourigen Rührwerk 5 Sekunden gemischt und anschließend in eine auf 80°C temperierte offene Form gegossen. Nach 60 Sekunden wird die gebildete Folie aus der Form genommen und sofort im noch heißen Zustand durch Ziehen und Knicken auf Anfangsfestigkeit und Heißbruch geprüft.

Für den RIM-Prozess (reaction injection molding) werden die Kompositionen A und B bei einer Temperatur von 60°C auf einer Hochdruckanlage mit einem Hochdruckmischer gemischt und in eine auf 100°C temperierte und geschlossene Form gespritzt. Nach 50 Sekunden wird die gebildete Folie wie im Gießverfahren auf die Anfangsfestigkeit geprüft.

Die in den nachfolgenden Tabellen angegebenen Kompositionen A und B wurden im Gießverfahren umgesetzt.

**Tabelle I: Prepolymere (A1), die in den Beispielen eingesetzt wurden**

| **A1) Prepolymer** | **A1i) Polyol** | **A1i) Polyol** (Gew.-Teile) | **A1ii) Trimerisat auf HDI-Basis** (Gew.-Teile) | **Viskosität** bei 40°C (mPas) | **OH-Zahl gemessen** |
|---|---|---|---|---|---|
| Prepolymer 1 | Polypropylenetherpolyol (OH-Zahl 110) | 100,00 | 16,80 | 4800 | 31 |
| Prepolymer 2 | Polypropylenetherpolyol (OH-Zahl 54) | 60,00 | 8,40 | 3200 | 16 |
| | PCL-PTHF-Copolymer (OH-Zahl 58) | 40,00 | | | |
| Prepolymer 3 | Polypropylenetherpolyol (OH-Zahl 54) | 50,00 | 8,40 | 3650 | 17 |
| | PTHF (OH-Zahl 56) | 50,00 | | | |
| Prepolymer 4 | PCL-PTHF-Copolymer (OH-Zahl 58) | 50,00 | 8,40 | 5300 | 16 |
| | Neopentylglykol-Adipat (OH-Zahl 55) | 50,00 | | | |

### Herstellung der trifunktionellen und OH-terminierten Prepolymere (A1):

Das Polyol bzw. die Polyole und Trimerisat auf HDI-Basis wurden unter Rühren in einem Reaktor 3 Stunden bei 80°C umgesetzt.

| | |
|---|---|
| Polyol 1 (A1i), A2): | Polypropylenetherpolyol, Molmasse 1000, OH-Zahl 110, Propylenoxid(PO)-Gehalt 100%, (Desmophen 1110, Fa. Bayer) |
| Polyol 2 (A1i), A2): | Polypropylenetherpolyol, Molmasse 2000, OH-Zahl 54, PO-Gehalt 100%, (Desmophen 3600, Fa. Bayer) |
| Polyol 3 (A1i), A2): | Polycaprolacton(PCL)-Polytetrafydrofuran(PTHF)-Copolymer, Molmasse 2000, OH-Zahl 58, PO-Gehalt 100%, (Capa 7201, Fa. Interox) |

| | |
|---|---|
| Polyol 4 (A1i), A2): | Polytetrafydrofuran, Molmasse 2000, OH-Zahl 56, (PTHF, Fa. BASF) |
| Polyol 5 (A1i), A2): | Neopentylglykol-Adipat, Molmasse 2000, OH-Zahl 55, (Desmophen 2028, Fa. Bayer) |

**Tabelle II: Isocyanat-Komposition B, die in den Beispielen eingesetzt wurde**

| **B** | **Bi) IPDI** (Gew.-Teile) | **Bi) H₁₂-MDI** (Gew.-Teile) | **Bii) Trimerisat auf HDI-Basis** (Gew.-Teile) | **Bii) Trimer auf HDI-Basis mit Biuretstruktur** (Gew.-Teile) | **NCO-Gehalt** (%) |
|---|---|---|---|---|---|
| ISO 1 | 100,00 | --- | 50,00 | | 32,2 |
| ISO 2 | 100,00 | --- | 80,00 | | 30,1 |
| ISO 3 | -- | 100,00 | 40,00 | | 28,4 |
| ISO 4 | 100,00 | --- | --- | 65,00 | 31,1 |

**Tabelle III: Beispiele**

| | | **Beispiel 1** | **Beispiel 2** | **Beispiel 3** | **Beispiel 4** | **Beispiel 5** |
|---|---|---|---|---|---|---|
| | | Gew.-Teile | Gew.-Teile | Gew.-Teile | Gew.-Teile | Gew.-Teile |
| **A1)** | Prepolymer 1 | 40,0 | | | | |
| | Prepolymer 2 | | 50,0 | | | 60,0 |
| | Prepolymer 3 | | | 35,0 | | |
| | Prepolymer 4 | | | | 25,0 | |
| **A2)** | Polyol 1 | 20,0 | | | | |
| | Polyol 2 | | 20,0 | 30,0 | | 18,0 |
| | Polyol 3 | 26,0 | 17,0 | | 40,0 | 11,0 |
| | Polyol 4 | | | 20,0 | | |
| | Polyol 5 | | | | 23,0 | |
| **A3)** | Kettenverlängerer/ | | | | | |
| | Vernetzer | | | | | |
| | 1,4-Butandiol | 10,0 | | 6,0 | 6,0 | 6,0 |
| | 1,6-Hexandiol | | 8,0 | | | |
| | Trimethylolpropan | | | 3,0 | 2,0 | |
| | Ethanolamin | | | | 4,0 | 5,0 |
| | Diethanolamin | 4,0 | 5,0 | 6,0 | | |
| **A4)** | Katalysator-System | | | | | |
| | Wismut-Neodecanoat | 0,30 | 0,35 | 0,30 | 0,35 | 0,35 |
| | Dimethylaminopropylharnstoff | 0,15 | 0,15 | 0,10 | 0,20 | 0,20 |
| **A5)** | Stabilisator-System | | | | | |
| | Tinuvin 213 und | 0,25 | 0,25 | 0,25 | 0,25 | 0,25 |
| | Tinuvin 123 und | | | | | |
| | Irganox 245 | | | | | |
| **B)** | Isocyanat-Komposition | | | | | |
| | ISO 1 | 58,2 | | 59,1 | | |
| | ISO 2 | | 48,5 | | | |
| | ISO 3 | | | | 58,8 | |
| | ISO 4 | | | | | 49,1 |

| | | | | | | |
|---|---|---|---|---|---|---|
| Stabilisator-System (A5): Antioxidans: . Irganox 245 (Fa. Ciba) UV-Absorber: Tinuvin 213 (Fa. Ciba) Lichtstabilisator: HALS: Tinuvin 123 (Fa. Ciba) | | | | | | |

**Tabelle IV: Vergleichsbeispiele (Stand der Technik)**

| | **Beispiel 6** | **Beispiel 7** |
|---|---|---|
| | Gew.-Teile | Gew.-Teile |
| Polyethertriol (Propylenoxid- und Ethylenoxid-Gehalt) | 90,0 | |
| Molmasse 4800, OH-Zahl 35, | | |
| 85% primäre OH-Gruppen, 15% EO | | |
| Quasiprepolymer-Polyol: | | 85,0 |
| Polyetherdiol, Molmasse 2000, OH-Zahl 56, 100% PO und IPDI, | | |
| 100/2,5, gemessene OH-Zahl: 44 | | |
| Ethylenglykol | 7,0 | 7,0 |
| Diethanolamin | 3,5 | 6,0 |
| Blei-2-ethylhexoat | 0,5 | 0,5 |
| Dimethylzinndineodecanoat | 0,25 | 0,25 |
| UV-Stabilisator | 6,0 | 6,0 |
| IPDI / IPDI-Trimerisat (48 / 52), 28% NCO | 60,9 | |
| H₁₂-MDI / IPDI-Trimerisat (40 / 60), 24% NCO | | 95,9 |

**Tabelle V: Reaktivität und physikalische Eigenschaften**

| **Eigenschaften** | **Beispiel 1** Gew.-Tle | **Beispiel 2** Gew.-Tle | **Beispiel 3** Gew.-Te | **Beispiel 4** Gew.-Tle | **Beispiel 5** Gew.-Tle | **Beispiel 6** (SdT) Gew.-Tle | **Beispiel 7** (SdT) Gew.-Tle |
|---|---|---|---|---|---|---|---|
| Gelierzeit (Sekunden) | 5 | 5 | 5 | 5 | 5 | 7 | 5 |
| Formstandzeit (Sekunden) | 60 | 50 | 50 | 60 | 60 | 180 | 140 |
| Zugfestigkeit (MPa) DIN/ISO 527-3 | 16 | 18 | 15 | 19 | 18 | 7 | 9 |
| Bruchdehnung (%) DIN/ISO 527-3 | 190 | 225 | 205 | 265 | 220 | 130 | 170 |
| Weiterreißfestigkeit (N/mm) DIN/ISO 13937 | 8 | 12 | 7 | 11 | 12 | 4 | 5 |
| Kratzfestigkeit Fingernagelprobe | keine Schreib wirkung | keine Schreib Wirkung | keine Schreib wirkung | keine Schreib wirkung | keine Schreib wirkung | starke Schreib wirkung | schwa che Schreib wirkung |
| Wärmebeständigkeit 3 d / 120°C | kein Glanz keine Klebrigkeit | kein Glanz keine Klebrigkeit | kein Glanz keine Klebrigkeit | kein Glanz keine Klebrigkeit | kein Glanz keine Klebrig keit | starker Glanz geringe Klebrig keit | geringer Glanz geringe Klebrig keit |
| Heißlichtechtheit VDA 75202 Graumaßstab | keine Glanz- und Farbver änderung | keine Glanz- und Farbver anderung | keine Glanz- und Farbver änderung | keine Glanz- und Farbver änderung | keine Glanz- und Farbver änderung | starker Glanz, keine Farbver ände rung | starker Glanz, keine Farbver änder ung |

Bei den Vergleichsbeispielen gemäß dem Stand der Technik (Beispiele 6 und 7) wurden deutlich längere Formstandzeiten, deutlich geringere Festigkeitseigenschaften und eine geringere Wärme- und Heißlichtstabilität gemessen als bei den erfindungsgemäßen Polyurethanformteilen.

In einer Ausgestaltung des Polyurethanformteils mit Polypropylenetherpolyol und PCL-PTHF-Copolymer als Komponente A1i) und A2 und mit IPDI (Bi)) und Trimerisat auf HDI-Basis (Bii)) als Isocyanat-Komposition B sowie Trimerisat auf HDI-Basis als Komponente A1ii) für das Prepolymer wird eine besonders geringe Formstandzeit und eine besonders hohe Zugfestigkeit, Bruchdehnung sowie Weiterreißfestigkeit erreicht.

In einer Ausgestaltung des Polyurethanformteils mit Polypropylenetherpolyol und Polytetrahydrofuran (PTHF) als Komponente A1i) und A2 und mit IPDI (Bi)) und Trimerisat auf HDI-Basis (Bii)) als Isocyanat-Komposition B sowie Trimerisat auf HDI-Basis als Komponente A1ii) für das Prepolymer wird eine besonders geringe Formstandzeit und eine hohe Zugfestigkeit, Bruchdehnung sowie Weiterreißfestigkeit erreicht.

In einer Ausgestaltung des Polyurethanformteils mit PCL-PTHF-Copolymer und Neopentylglykol-Adipat als Komponente A1i) und A2 und mit H₁₂-MDI (Bi)) und Trimerisat auf HDI-Basis (Bii)) als Isocyanat-Komposition B sowie Trimerisat auf HDI-Basis als Komponente A1ii) für das Prepolymer wird eine geringe Formstandzeit und eine ganz besonders hohe Zugfestigkeit, Bruchdehnung sowie Weiterreißfestigkeit erreicht.

In einer Ausgestaltung des Polyurethanformteils mit Polypropylenetherpolyol und PCL-PTHF-Copolymer als Komponente A1i) und A2 und mit IPDI (Bi)) und Trimer auf HDI-Basis mit Biuretstruktur (Bii) als Isocyanat-Komposition B sowie Trimerisat auf HDI-Basis als Komponente A1ii) für das Prepolymer wird eine geringe Formstandzeit und eine besonders hohe Zugfestigkeit, Bruchdehnung sowie Weiterreißfestigkeit erreicht.

Das besondere Eigenschaftsprofil des erfindungsgemäßen Polyurethanformteils, wie hohe mechanische Festigkeit und hohe Temperatur- und Lichtstabilität, sowie dessen wirtschaftliche Herstellung bei kurzen Formstandzeiten konnte mit Polyurethansystemen nicht erreicht werden, bei denen die Polyolkomponente nur mit H₁₂-MDI oder IPDI oder auch in Kombination mit dem entsprechenden Trimerisat umgesetzt wurde.

Auch bei der Bewertung der mechanischen Eigenschaften und Heißlichtstabilität zeigten die Vergleichsmischungen deutliche Nachteile. Insbesondere bei der Zugfestigkeit und Weiterreißfestigkeit der hergestellten Prüffolien konnten nur Werte von 50% bis 60% der erfindungsgemäßen Reaktionssysteme erreicht werden.

Die Oberflächen der Folien der Vergleichsmischungen zeigten nach der Heißlichtalterung bei 120°C ein deutliches Aufglänzen, während die Folien gemäß der Erfindung keine Veränderungen bzgl. Glanzgrad und Narbenstabilität aufwiesen.

## Patentansprüche

1. Verfahren zur Herstellung eines aliphatischen und/oder cycloaliphatischen Polyurethanformteils in einem Gießverfahren oder Spritzformreaktionsverfahren, bei dem
A) eine Komposition aus
A1) einem OH-terminierten trifunktionalen Prepolymer aus
i) Polyol oder einer Polyolkombination und
ii) Trimerisat auf Hexamethylendiisocyanat(HDI)-Basis und/oder Trimer auf Hexamethylendiisocyanat(HDI)-Basis mit Biuretstruktur,
A2) einem Polyol oder einer Polyolkombination,
A3) mindestens einem di- und/oder trifunktionellen Kettenverlängerer und/oder Vernetzer mit Amin- und/oder Hydroxylgruppen und
A4) einem Katalysator-System aus mindestens einer metallorganischen Verbindung in Kombination mit mindestens einem Aminkatalysator und gegebenenfalls
A5) einem Stabilisator-System und gegebenenfalls
A6) mindestens einem Additiv
sowie
B) eine Isocyanat-Komposition aus
i) 10 bis 90 Gew.% Isophorondiisocyanat (IPDI) und/oder Methylen-bis-(4-isocyanatocyclohexan) (H₁₂-MDI) und
ii) 10 bis 90 Gew.% Trimer auf Hexamethylendiisocyanat(HDI)-Basis mit Biuretstruktur und/oder Trimerisat auf Hexamethylendiisocyanat(HDI)-Basis
umgesetzt werden.

2. Verfahren nach Anspruch 1, bei dem
A1) 20 bis 85 Gew.% des Prepolymers bezogen auf das Gewicht der gesamten Komposition A,
A2) 10 bis 70 Gew.% des Polyols oder der Polyolkombination bezogen auf das Gewicht der gesamten Komposition A,
A3) 5 bis 20 Gew.% des Kettenverlängerers und/oder Vernetzers bezogen auf das Gewicht der gesamten Komposition A,
A4) 0,01 bis 3,5 Gew.% des Katalysator-Systems bezogen auf das Gewicht der gesamten Komposition A und/oder
A5) 0,2 bis 1,5 des Gew.% Stabilisator-Systems bezogen auf das Gewicht der gesamten Komposition A
eingesetzt werden.

3. Verfahren nach Anspruch 1 oder 2, bei dem
B) als Isocyanat-Komposition
i) 40 bis 80 Gew.%, insbesondere 50 bis 75 Gew.%, des IPDI und/oder des H₁₂-MDI bezogen auf das Gewicht der gesamten Isocyanat-Komposition B und
ii) 20 bis 60 Gew.%, insbesondere 25 bis 50 Gew.%, des Trimers auf HDI-Basis mit Biuretstruktur und/oder des Trimerisats auf HDI-Basis bezogen auf das Gewicht der gesamten Isocyanat-Komposition B
eingesetzt werden.

4. Verfahren nach einem der vorhergehenden Ansprüche, bei dem
A1i) und/oder A2) als Polyol allein oder als Polyolkombination eines bzw. eine ausgewählt aus der Gruppe von Polypropylenetherpolyol, Polycaprolacton(PCL)-Polytetrahydrofuran(PTHF)-Copolymer, Polytetrahydrofuran, Polycarbonatdiol und/oder Polyadipat auf der Basis von Butandiol, Hexandiol und/oder Neopentylglykol mit einer Molmasse von 650 bis 4000 eingesetzt wird.

5. Verfahren nach einem der vorhergehenden Ansprüche, bei dem
A3) als Kettenverlängerer und/oder Vernetzer einer allein oder in Kombination ausgewählt aus der Gruppe von Butandiol, Hexandiol, Trimethyolpropan, Ethanolamin, Diethanolamin, Ethylendiamin und/oder Hexamethylendiamin mit einer Molmasse von 60 bis 250 eingesetzt wird.

6. Verfahren nach einem der vorhergehenden Ansprüche, bei dem
A4) als Katalysator-System eines ausgewählt aus der Gruppe der metallorganischen Verbindungen, insbesondere Wismut und/oder Zinn- und/oder Zirconium- und/oder Kaliumverbindungen, in Kombination mit Aminkatalysatoren, insbesondere Triethylendiamin und/oder Dimethylaminopropylharnstoff, eingesetzt wird.

7. Verfahren nach einem der vorhergehenden Ansprüche, bei dem
A5) als Stabilisator-System zumindest eines ausgewählt aus der Gruppe der Antioxidantien, UV-Absorber und/oder Lichtstabilisatoren eingesetzt wird.

8. Verfahren nach einem der vorhergehenden Ansprüche, bei dem
A6) als Additiv Wasserabsorptionsmittel, Fließhilfsmittel und/oder interne Formtrennmittel eingesetzt werden.

9. Verfahren nach einem der vorhergehenden Ansprüche, bei dem die Kompositionen A und B mit einem NCO-Index zwischen 95 und 115 bei einer Temperatur von 40 bis 60°C verarbeitet werden und in eine auf eine Temperatur zwischen 60°C und 120°C, insbesondere zwischen 80°C und 100°C, temperierte Form gegossen bzw. gespritzt werden.

10. Polyurethanformteil, erhältlich nach einem Verfahren nach einem der vorhergehenden Ansprüche.

11. Polyurethanformteil nach Anspruch 10, das eine Formstandzeit von kleiner oder gleich 60 Sekunden, bevorzugt von kleiner oder gleich 50 Sekunden, und eine Zugfestigkeit nach DIN/ISO 527-3 von größer 10 MPa, bevorzugt von größer 15 MPa, und/oder eine Bruchdehnung nach DIN/ISO 527-3 von größer 170%, bevorzugt von größer 190%, und/oder eine Weiterreißfestigkeit nach DIN/ISO 13937 von größer 5 N/mm, bevorzugt von größer 7 N/mm, aufweist.

12. Verwendung eines Polyurethanformteils nach Anspruch 10 oder 11 als Folie, insbesondere zur Oberflächenverkleidung von Bauteilen, insbesondere im Automobilinnenbereich.

13. Polyurethansystem, das die Kompositionen A und B gemäß den Ansprüchen 1 bis 8 umfasst.

14. Polyurethansystem nach Anspruch 13, das eine Formstandzeit von kleiner oder gleich 60 Sekunden, bevorzugt von kleiner oder gleich 50 Sekunden, und eine Zugfestigkeit nach DIN/ISO 527-3 von größer 10 MPa, bevorzugt von größer 15 MPa, und/oder eine Bruchdehnung nach DIN/ISO 527-3 von größer 170%, bevorzugt von größer 190%, und/oder eine Weiterreißfestigkeit nach DIN/ISO 13937 von größer 5 N/mm, bevorzugt von größer 7 N/mm, aufweist.

15. Verwendung des Polyurethansystems nach Anspruch 13 oder 14 zur Herstellung von Formkörpern, Vliesstoffen oder Folien für hygienische und medizinische Anwendungen.

## Claims

1. Method for producing an aliphatic and/or cycloaliphatic polyurethane moulded part in a casting process or reaction injection moulding process, wherein
A) a composition consisting of
A1) an OH-terminated trifunctional prepolymer consisting of
i) polyol or a polyol combination and
ii) hexamethylene diisocyanate (HDI)-based trimerisate and/or hexamethylene diisocyanate (HDI)-based trimer having a biuret structure,
A2) a polyol or a polyol combination,
A3) at least one difunctional and/or trifunctional chain extender and/or cross-linker with amine and/or hydroxyl groups and
A4) a catalyst system consisting of at least one metallo-organic compound in combination with at least one amine catalyst, and optionally
A5) a stabiliser system, and optionally
A6) at least one additive,
as well as
B) an isocyanate composition consisting of
i) 10 to 90 wt.% of isophorone diisocyanate (IPDI) and/or methylene-bis-(4-isocyanatocyclohexane) (H₁₂-MDI) and
ii) 10 to 90 wt.% of hexamethylene diisocyanate (HDI)-based trimer having a biuret structure and/or hexamethylene diisocyanate (HDI)-based trimerisate are converted.

2. Method as claimed in Claim 1, wherein
A1) 20 to 85 wt.% of the prepolymer relative to the total weight of composition A,
A2) 10 to 70 wt.% of the polyol or polyol combination relative to the total weight of composition A,
A3) 5 to 20 wt.% of the chain extender and/or cross-linker relative to the total weight of composition A,
A4) 0.01 to 3.5 wt.% of the catalyst system relative to the total weight of composition A, and/or
A5) 0.2 to 1.5 wt.% of the stabiliser system relative to the total weight of composition A,
are used.

3. Method as claimed in Claim 1 or 2, wherein
B) as the isocyanate composition
i) 40 to 80 wt.%, in particular 50 to 75 wt.% of the IPDI and/or of the H₁₂-MDI relative to the total weight of the isocyanate composition B, and
ii) 20 to 60 wt.%, in particular 25 to 50 wt.% of the HDI-based trimer having a biuret structure and/or of the HDI-based trimerisate relative to the total weight of the isocyanate composition B,
are used.

4. Method as claimed in any one of the preceding Claims, wherein
A1i) and/or A2) any substance selected from the group of polypropylene ether polyol, polycaprolactone (PCL) / polytetrahydrofuran (PTHF) copolymer, polytetrahydrofuran, polycarbonate diol and/or polyadipate based on butanediol, hexanediol and/or neopentyl glycol having a molar mass of 650 to 4000 is used as the polyol alone or as the polyol combination.

5. Method as claimed in any one of the preceding Claims, wherein
A3) any substance, alone or in combination, selected from the group of butanediol, hexanediol, trimethyolpropane, ethanolamine, diethanolamine, ethylenediamine and/or hexamethylenediamine having a molar mass of 60 to 250 is used as the chain extender and/or cross-linker.

6. Method as claimed in any one of the preceding Claims, wherein
A4) any substance selected from the group of metallo-organic compounds, in particular bismuth and/or tin compounds and/or zirconium compounds and/or potassium compounds in combination with amine catalysts, in particular triethylenediamine and/or dimethylaminopropyl urea is used as the catalyst system.

7. Method as claimed in any one of the preceding Claims, wherein
A5) at least one substance selected from the group of antioxidants, UV absorbers and/or light stabilisers is used as the stabiliser system.

8. Method as claimed in any one of the preceding Claims, wherein
A6) water absorbers, flow-enhancing agents and/or internal mould-release agents are used as the additives.

9. Method as claimed in any one of the preceding Claims, wherein
the compositions A and B are processed with an NCO index between 95 and 115 at a temperature of 40 to 60°C and are cast or injected into a mould maintained at a temperature between 60°C and 120°C, in particular between 80°C and 100°C.

10. Polyurethane moulded part obtained by means of a method as claimed in any one of the preceding Claims.

11. Polyurethane moulded part as claimed in Claim 10, which has a mould residence time of less than or equal to 60 seconds, preferably less than or equal to 50 seconds, and a tensile strength pursuant to DIN/ISO 527-3 of more than 10 MPa, preferably more than 15 MPa, and/or an elongation at break pursuant to DIN/ISO 527-3 of more than 170%, preferably more than 190%, and/or a tear resistance pursuant to DIN/ISO 13937 of more than 5 N/mm, preferably more than 7 N/mm.

12. Use of a polyurethane moulded part as claimed in Claim 10 or 11 as a sheet, in particular for covering the surface of components, in particular in the interior of an automobile.

13. Polyurethane system which includes the compositions A and B in accordance with Claims 1 to 8.

14. Polyurethane system as claimed in Claim 13, which has a mould residence time of less than or equal to 60 seconds, preferably less than or equal to 50 seconds, and a tensile strength pursuant to DIN/ISO 527-3 of more than 10 MPa, preferably more than 15 MPa, and/or an elongation at break pursuant to DIN/ISO 527-3 of more than 170%, preferably more than 190%, and/or a tear resistance pursuant to DIN/ISO 13937 of more than 5 N/mm, preferably more than 7 N/mm.

15. Use of the polyurethane system as claimed in Claim 13 or 14 for producing moulded bodies, non-woven fabrics or sheets for hygienic and medical applications.

## Revendications

1. Procédé de préparation d'une pièce moulée en polyuréthanne aliphatique et/ou cycloaliphatique selon un procédé de coulée ou un procédé de moulage par injection, dans lequel on fait réagir
A) une composition consistant en
A1) un prépolymère trifonctionnel à terminaison OH, composé de
i) un polyol ou une combinaison de polyols, et
ii) un trimère à base de l'hexaméthylènediisocyante (HDI) et/ou un trimère à base de l'hexaméthylènediisocyanate (HDI) à structure biuret,
A2) un polyol ou une combinaison de polyols,
A3) au moins un agent d'allongement de chaîne et/ou agent de réticulation, di- et/ou trifonctionnels, ayant des radicaux amine et/ou hydroxyle, et
A4) un système catalytique consistant en au moins un composé métallo-organique en combinaison avec au moins un catalyseur amine, et le cas échéant
A5) un système stabilisant, et le cas échéant
A6) au moins un additif,
avec
B) une composition isocyanate consistant en
i) 10 à 90 % en poids d'isophoronediisocyanate (IPDI) et/ou de méthylène-bis-(4-isocyanatocyclohexane) (H₁₂-MDI), et
ii) 10 à 90 % en poids d'un trimère à base de l'hexaméthylènediisocyante (HDI) à structure biuret et/ou d'un trimère à base de l'hexaméthylènediisocyante (HDI),

2. Procédé selon la revendication 1, dans laquelle on met en oeuvre
A1) 20 à 85 % en poids du prépolymère par rapport au poids de la composition A totale,
A2) 10 à 70 % en poids du polyol ou de la combinaison de polyols par rapport au poids de la composition A totale,
A3) 5 à 20 % en poids de l'agent d'allongement de chaîne et/ou de l'agent de réticulation par rapport au poids de la composition A totale,
A4) 0,01 à 3,5 % en poids du système de catalyseur par rapport au poids de la composition A totale, et/ou
A5) 0,2 à 1,5 % en poids du système stabilisant par rapport au poids de la composition A totale.

3. Procédé selon la revendication 1 ou 2, dans lequel on met en oeuvre
B) comme composition isocyanate
i) 40 à 80 % en poids, en particulier 50 à 75 % en poids d'IPDI et/ou de H₁₂-MDI, par rapport au poids de la composition d'isocyanate B totale, et
ii) 20 à 60 % en poids, en particulier 25 à 50 % en poids du trimère à base de HDI à structure biuret et/ou du trimère à base de HDI, par rapport au poids de la composition d'isocyanate B totale.

4. Procédé selon l'une des revendications précédentes, dans lequel on met en oeuvre comme Ali) et/ou A2) en tant que polyol seul ou combinaison de polyols, l'un choisi parmi le groupe du polypropylèneétherpolyol, du copolymère polycaprolactone (PCL)-polytétrahydrofuranne (PTHF), du polytétrahydrofuranne, du polycarbonatediol et/ou d'un polyadipate avec le butanediol, l'hexanediol et/ou le néopentylglycol, avec une masse molaire allant de 650 à 4000.

5. Procédé selon l'une des revendications précédentes, dans lequel on met en oeuvre comme A3) en tant qu'agent d'allongement de chaîne et/ou agent de réticulation, un ou plusieurs en combinaison choisis parmi le groupe du butanediol, l'hexanediol, le triméthylolpropane, l'éthanolamine, la diéthanolamine, l'éthylènediamine et/ou l'hexaméthylènediamine, avec une masse molaire allant de 60 à 250.

6. Procédé selon l'une des revendications précédentes, dans lequel on met en oeuvre comme A4) en tant que système catalytique, un composé choisi parmi le groupe des composés métallo-organiques, en particulier des composés du bismuth et/ou de l'étain et/ou du zirconium et/ou du potassium, en combinaison avec des catalyseurs amine, en particulier la triéthylènediamine et/ou la diméthylaminopropylurée.

7. Procédé selon l'une des revendications précédentes, dans lequel on met en oeuvre comme A5) en tant que système stabilisant, au moins l'un choisi parmi le groupe des antioxydants, des agents absorbant les U.V. et/ou des stabilisants à la lumière.

8. Procédé selon l'une des revendications précédentes, dans lequel on met en oeuvre comme A6) en tant qu'additif un agent absorbant l'eau, un auxiliaire d'écoulement et/ou un agent de démoulage.

9. Procédé selon l'une des revendications précédentes, dans lequel on travaille les compositions A et B avec un indice NCO allant de 95 à 115, à une température allant de 40 à 60°C, et on coule ou injecte dans un moule équilibré à une température située dans l'intervalle allant de 60°C à 120°C, en particulier de 80°C à 100°C.

10. Pièce moulée en polyuréthanne, obtenue selon un procédé selon l'une des revendications précédentes.

11. Pièce moulée en polyuréthanne selon la revendication 10, qui présente un temps de séjour dans le moule inférieur ou égal à 60 secondes, de préférence inférieur ou égal à 50 secondes, une résistance en traction selon DIN/ISO 527-3 supérieure à 10 MPa, de préférence supérieure à 15 MPa, et/ou un allongement à la rupture selon DIN/ISO 527-3 supérieur à 170 %, de préférence supérieur à 190 %, et/ou une résistance à la propagation du déchirement selon DIN/ISO 13937 de plus de 5 N/mm, de préférence plus de 7 N/mm.

12. Utilisation d'une pièce moulée en polyuréthanne selon la revendication 10 ou 11, comme feuille, en particulier pour le revêtement des surfaces de pièces de construction, en particulier dans le secteur de l'habitacle des automobiles.

13. Système polyuréthanne, qui comprend les compositions A et B selon les revendications 1 à 8.

14. Système polyuréthanne selon la revendication 13, qui présente un temps de séjour dans le moule inférieur ou égal à 60 secondes, de préférence inférieur ou égal à 50 secondes, une résistance en traction selon DIN/ISO 527-3 supérieure à 10 MPa, de préférence supérieure à 15 MPa, et/ou un allongement à la rupture selon DIN/ISO 527-3 supérieur à 170 %, de préférence supérieur à 190 %, et/ou une résistance à la propagation du déchirement selon DIN/ISO 13937 de plus de 5 N/mm, de préférence plus de 7 N/mm.

15. Utilisation du système polyuréthanne selon la revendication 13 ou 14, pour la préparation de corps moulés, de non-tissés ou de feuilles pour des applications hygiéniques et médicales.
